# EUROPÄISCHE PATENTSCHRIFT

(11) **EP 1 088 150 B1**
(45) Veröffentlichungstag und Bekanntmachung des Hinweises auf die Patenterteilung: **01.03.2006**
(21) Anmeldenummer: 99936336.9
(22) Anmeldetag: 21.05.1999
(51) Int. Cl.: E21B 17/042, F16L 15/00

(54) **BOHRGESTÄNGEVERBINDER**
DRILL ROD COUPLING
RACCORD DE TIGE DE FORAGE

(30) Priorität: 17.06.1998 DE 19827821
(43) Veröffentlichungstag der Anmeldung: 04.04.2001
(73) Patentinhaber: VALLOUREC MANNESMANN OIL & GAS GERMANY GMBH, 40472 Düsseldorf (DE)
(72) Erfinder: KRUG, Gerhard, D-47259 Duisburg (DE); QUADFLIEG, Erich, D-47800 Krefeld (DE)
(74) Vertreter: Meissner, Peter E.
(86) Internationale Anmeldenummer: PCT/DE1999/001566
(87) Internationale Veröffentlichungsnummer: WO 1999/066170

(56) Entgegenhaltungen:
- DE-A- 3 245 819

## Beschreibung

Die Erfindung betrifft einen Bohrgestängeverbinder gemäß dem Gattungsbegriff des Patentanspruches 1.

Ein gattungsbildender Bohrgestängeverbinder ist aus der WO96/03605 bekannt. Er besteht aus einem Zapfenelement, das einen zwischen einer äußeren Schulter und einer Zapfenstirnfläche angeordneten kegeligen Außengewindeabschnitt und einen zwischen der äußeren Schulter und dem Außengewindeabschnitt sowie einen zwischen dem Außengewindeabschnitt und der Zapfenstirnfläche angeordneten gewindefreien Abschnitt aufweist und mit einem mit dem Zapfenelement verschraubbaren Muffenelement, das einen zwischen einer inneren Schulter und einer Muffenstirnfläche angeordneten kegeligen Innengewindeabschnitt und einen zwischen der inneren Schulter und dem Innengewindeabschnitt sowie einen zwischen dem Innengewindeabschnitt und der Muffenstirnfläche angeordneten gewindefreien Abschnitt aufweist, wobei die im verschraubten Zustand einander gegenüberliegenden gewindefreien Abschnitte im Bereich der äußeren Schulter länger sind als die im Bereich der inneren Schulter liegenden gewindefreien Abschnitte des Zapfen- und des Muffenelementes. Die bei der Verschraubung mit der Muffenstirnfläche in Kontakt tretende äußere Schulter bildet die Primärschulter. Die bei der Verschraubung in der Primärschulter auftretenden Axialkräfte sind größer als die an der inneren Schulter auftretenden Kräfte. Dabei erfolgt die Verschraubung mit mindestens 50%, vorzugsweise mit 60% der Streckgrenze des Bohrgestängeverbinders.

Der äußere Durchmesser des Muffenelementes ist im Bereich des gewindefreien Abschnittes reduziert gegenüber dem restlichen Muffenelement. Diese Querschnittsverringerung erlaubt das erforderliche Zusammenstauchen des gewindefreien Abschnittes in Relation zur Längung des gewindefreien Abschnittes des Zapfenelementes, wenn die Primärschulter aktiviert wird.

Der bekannte Bohrgestängeverbinder hat den Nachteil, daß die bei der Verschraubung und bei Benutzung auftretenden Spannungen ausschließlich als axiale Spannungen berücksichtigt sind, so daß das Bauteil nicht voll genutzt werden kann. Das Verschraubmoment ist zu klein, so daß die Gefahr einer Separierung der Stoßflächen besteht. Eine solche Separierung verringert die Wechselbelastbarkeit und kann zum Dauerbruch führen.

Ein vergleichbarer Bohrgestängeverbinder ist in der DE 32 45 819 B1 offenbart. Er weist die gleichen Merkmale wie der zuvor beschriebene Bohrgestängeverbinder auf, wobei auch bei dieser Konstruktion die Außenschulter die Primärschulter bildet, die beim Verschrauben zuerst aktiviert wird. Die Länge der im Bereich der Außenschulter liegenden gewindefreien Abschnitte ist ebenfalls größer als die der im Bereich der Innenschulter liegenden gewindefreien Abschnitte. Weiterhin wird vorgeschlagen, den Abstand von der Muffenstirnfläche bis zur inneren Schulter größer zu wählen als den Abstand von der Zapfenstirnfläche zur äußeren Schulter. Dadurch wird ein Spalt erzeugt, wenn beim Zusammenschrauben von Hand die Muffenstirnfläche an der äußeren Schulter zur Anlage kommt.

Auch für diese Konstruktion gilt das vorher Gesagte, daß die Gesamtspannungsverhältnisse nur teilweise berücksichtigt sind und das Bauteil dadurch nicht voll genutzt werden kann.

Aufgabe der Erfindung ist es, einen gattungsmäßigen Bohrgestängeverbinder anzugeben, der im Vergleich zu den bekannten Ausführungen ein deutlich höheres Drehmoment bei gleichen Abmessungsverhältnissen, d. h. dem Verhältnis von Außenzu Innendurchmesser entsprechend der bekannten Bohrgestängeverbinder oder ein vergleichbar hohes Drehmoment bei schlankeren Abmessungsverhältnissen, d. h. bei einem kleineren Verhältnis von Außen- zu Innendurchmesser, übertragen kann.

Diese Aufgabe wird ausgehend vom Oberbegriff in Verbindung mit den kennzeichnenden Merkmalen des Patentanspruches 1 gelöst. Vorteilhafte Weiterbildungen sind Bestandteil von Unteransprüchen.

Kern der Erfindung ist, daß im Gegensatz zu den bekannten Ausführungen bei der erfindungsgemäßen Konstruktion die innere Schulter die Primärschulter bildet und die im Bereich der inneren Schulter sich befindenden gewindefreien Abschnitte mindestens zweimal, vorzugsweise dreimal so lang sind wie die im Bereich der äußeren Schulter sich befindenden gewindefreien Abschnitte.

Diese Anordnung hat den Vorteil, daß durch den langen gewindefreien Abschnitt des Zapfens die Toleranzen des Bohrgestängeverbinders besser kompensiert werden können und daß bei der an der Innenschulter liegenden Primärschulter wegen niedrigerer Vergleichsspannungen höhere Kräfte aufgenommen werden können. Dies erfolgt selbst dann, wenn die Außenstoßfläche größer ist als die Innenstoßfläche. Die Außen- und die Innenschulter können auf diese Weise optimal genutzt werden. Durch die Vorbelastung der Innenschulter ergibt sich ein definierter Restanteil an Kräften für die Außenschulter, der unter Berücksichtigung der Fertigungstoleranzen optimiert werden kann und insgesamt zu einer höheren als bisher bekannten Auslastung der Innen- und Außenschultern verteilt werden kann. Daraus ergibt sich insgesamt ein höheres zulässiges Verschraub- oder Arbeitsdrehmoment.

Der Abstand von der Zapfenstirnfläche bis zur äußeren Schulter wird größer gewählt als der Abstand von der Muffenstirnfläche bis zur inneren Schulter. Dies gilt ohne Berücksichtigung der Toleranzen. Die lange dünne Lippe des Zapfens wird dabei als weicher Federweg für die Vorbelastung des Bohrgestängeverbinders ausgenutzt. Je nach Lage der Längentoleranzen werden die Innen- und Außenschulter unterschiedlich beansprucht, ohne jedoch die Belastung von 90% der Streckgrenze zu überschreiten. Durch das Zusammenwirken von Innen- und Außenschulter wird ein Torsionsmoment von etwa 80% der Streckgrenze erreicht.

Im Sinne einer Reduzierung der Gesamtspannung wird weiterhin vorgeschlagen, unter Beibehaltung eines groben Standardgewindes für den Außen- und Innengewindeabschnitt des Zapfen- bzw. Muffenelementes einen steileren Winkel zwischen 15 und 20 Grad für die Lastflanke statt 30° nach API vorzugeben. Bei einem Winkel von z. B. 18° wird der in die radiale Richtung sich erstreckende Anteil der Axialkraft nahezu halbiert. Auch die 45-Grad-Scherfläche wird dadurch vergrößert. Damit werden die Gesamtspannungen günstiger und das Bauteil stärker belastbar. Eine weitere Verbesserung ergibt sich dadurch, daß man einen Teil der Momente durch eine gezielte Überdeckung in dem der Innenschulter nahen Gewindebereich aufnehmen läßt. Dies kann man vorzugsweise durch eine unterschiedliche Kegelneigung der Gewindeabschnitte erreichen. Die Kegelneigung des Muffenelementes ist dabei steiler als die des Zapfenelementes. Der Unterschied in der Kegelneigung liegt im Bereich von 0,03 - 0,3 mm / Zoll (1 Zoll = 25,4 mm). Die Innenschultern werden durch die Gewindeüberdeckung entlastet, so daß das Verschraubmoment weiter erhöht werden kann.

Eine weitere Verbesserung der Konstruktion betrifft den Verschleiß des Außendurchmessers der Muffe. Dazu wird vorgeschlagen, die Außenfläche der Muffe von der Stirnfläche bis etwa über den 3. Gewindegang mit einer Ausdrehung zu versehen. Damit wird gewährleistet, daß auch bei einem Verschleiß des Außendurchmessers der Muffe die kritischen Querschnitte und damit die Spannungsverhältnisse konstant bleiben. Sobald auch der Bereich der Ausdrehung der Muffe erste Verschleißerscheinungen zeigt, muß der Bohrgestängeverbinder erneuert oder falls möglich nachgearbeitet werden.

Die vorgeschlagene Konstruktion ermöglichst es, ein vergleichbar hohes Drehmoment bei schlankeren Abmessungsverhältnissen, d. h. bei einem kleineren Verhältnis von Außen- zu Innendurchmesser zu übertragen. Ein kleines Außen- zu Innendurchmesserverhältnis, d. h. eine große lichte Weite und/oder ein entsprechend vergrößerter Ringraum außen sind günstig für eine Minimierung der Druckverluste im Inneren des Bohrstranges einerseits und andererseits für den ungehinderten Transport der Bohrspülung mit dem Bohrklein im äußeren Ringraum.

In der Zeichnung wird anhand eines Ausführungsbeispieles der erfindungsgemäß ausgebildete Bohrgestängeverbinder näher erläutert. Es zeigen:
- Figur 1a: im halbseitigen Längsschnitt ein erfindungsgemäß ausgebildetes Muffenelement
- Figur 1b: im halbseitigen Längsschnitt ein erfindungsgemäß ausgebildetes Zapfenelement
- Figur 2: im vergrößerten Maßstab die Gewindeform
- Figur 3: im halbseitigen Längsschnitt eine Variante des Muffenelementes

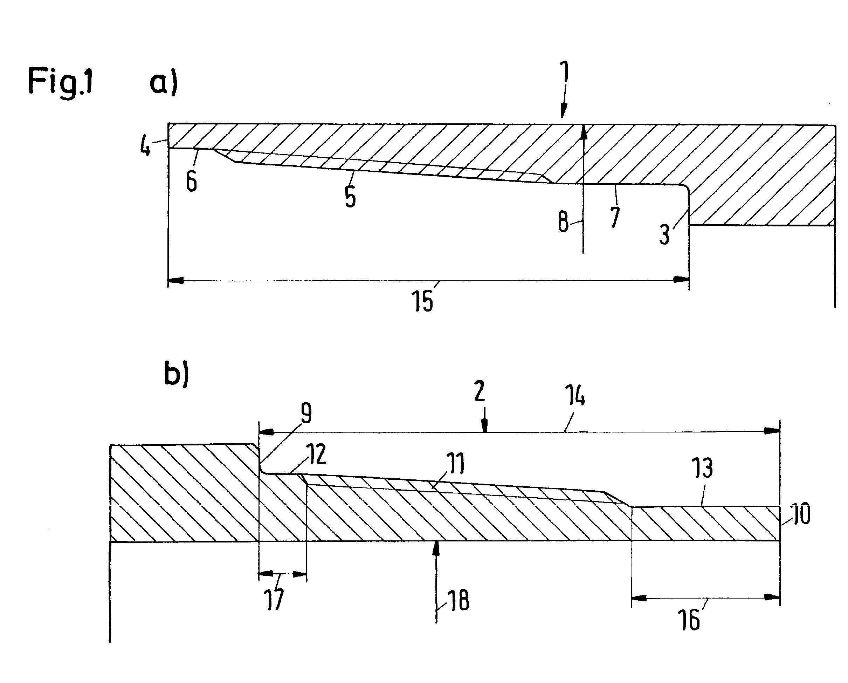

In Figur 1a ist in einem halbseitigen Längsschnitt ein erfindungsgemäß ausgebildetes Muffenelement 1 und in Figur 1b ein erfindungsgemäß ausgebildetes Zapfenelement 2 dargestellt. Das Muffenelement 1 weist ein zwischen einer inneren Schulter 3 und einer Muffenstirnfläche 4 liegenden kegeligen Innengewindeabschnitt 5 auf. Zwischen dem Anfang des Innengewindeabschnittes 5 und der Muffenstirnfläche 4 ist ein kegelig gewindefreier Abschnitt 6 angeordnet. Der zweite zylindrisch ausgebildete gewindefreie Abschnitt 7 befindet sich zwischen dem Ende des Innengewindeabschnittes 5 und der inneren Schulter 3. Der äußere Durchmesser des Muffenelementes 1 ist mit einem Pfeil 8 gekennzeichnet. Das mit dem Muffenelement 1 verschraubbare erfindungsgemäß ausgebildete Zapfenelement 2 weist einen zwischen einer äußeren Schulter 9 und einer Zapfenstirnfläche 10 liegenden Außengewindeabschnitt 11 auf. Zwischen dem Ende des Außengewindeabschnittes 11 und der äußeren Schulter 9 befindet sich ein zylindrisch ausgebildeter gewindefreier Abschnitt 12 und der zweite ebenfalls zylindrisch ausgebildete gewindefreie Abschnitt 13 befindet sich zwischen dem Anfang des Außengewindeabschnittes 11 und der Zapfenstirnfläche 10.

Erfindungsgemäß bildet die innere Schulter 3 die Primärschulter, die nach dem Handverschrauben als erste aktiviert wird. Dies wird dadurch erreicht, daß der Abstand 14 zwischen der Zapfenstirnfläche 10 und der äußeren Schulter 9 größer ist als der Abstand 15 zwischen der inneren Schulter 3 und der Muffenstirnfläche 4. Ein weiteres wesentliches Kennzeichen des erfindungsgemäß ausgebildeten Bohrgestängeverbinders ist, daß die Länge 16 der beiden einander gegenüberliegenden gewindefreien Abschnitte 7, 13 des Muffen- 1, bzw. Zapfenelements 2 mindestens zweimal größer ist als die Länge 17 der beiden einander gegenüberliegenden gewindefreien Abschnitte 6, 12 des Muffen- 1, bzw. Zapfenelementes 2. Der Innendurchmesser des Zapfenelementes 2 ist mit einem Pfeil 18 gekennzeichnet.

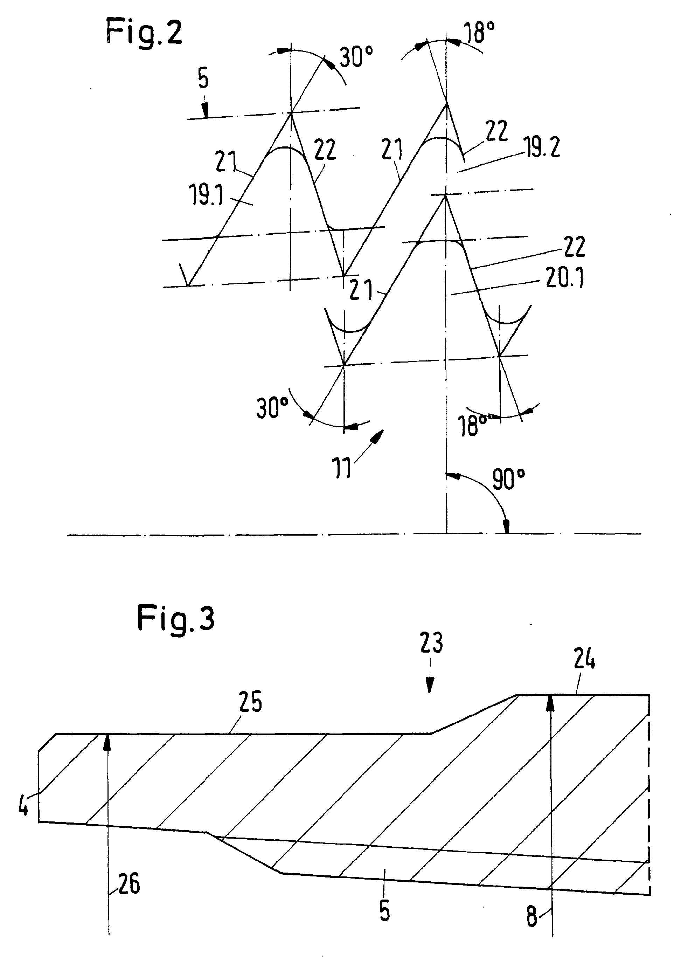

In Figur 2 ist in einem vergrößerten Maßstab die Gewindeform dargestellt. Der obere Teil der Figur 2 zeigt ausschnittweise 1 ½ Zahn 19.1, 19.2 des Innengewindeabschnittes 5 der Muffe 1. Der untere Teil zeigt ausschnittweise einen Zahn 20.1 des Außengewindeabschnittes 11 des Zapfens 2. Die Grundform beider Gewindeabschnitte 5, 11 ist ein grobes Standardgewinde nach API, das vorteilhaft ist für die notwendige häufige Verschraubung, die bis 100 mal betragen kann und für das Einfädeln das sogenannte "stabbing" von Zapfen 2 und Muffe 1. Die Führungsflanke 21 weist entsprechend der API-Vorschrift einen Winkel von 30° auf. Abweichend davon ist der Winkel der Lastflanke 22 steiler im Bereich von 15 - 20 Grad, vorzugsweise von 18 Grad. Dies gilt in gleicher Weise auch für die Zähne 20.1 des Außengewindeabschnittes 11 des Zapfens 2.

In Figur 3 ist in einem halbseitigen Längsschnitt eine Variante eines Muffenelementes 23 dargestellt. Im Unterschied zu dem in Figur 1a dargestellten Muffenelement 1 weist die Außenfläche 24 des Muffenelementes 23 eine den äußeren Durchmesser 8 verringernde Ausdrehung 25 auf. Diese Ausdrehung ist quasi eine Markierung für den Grad des Verschleißes der Außenfläche 24 des Muffenelementes 23. Mit steigendem Verschleiß nähert sich der äußere Durchmesser 8 der Außenfläche 24 immer mehr dem Durchmesser 26 der Ausdrehung 25. Dabei wird der Durchmesser 26 der Ausdrehung 25 so gewählt, daß auch für diesen Querschnitt optimale Spannungsverhältnisse gegeben sind.

## Patentansprüche

1. Bohrgestängeverbinder mit einem Zapfenelement (2), das ein zwischen einer äußeren Schulter (9) und einer Zapfenstirnfläche (10) angeordneten kegeligen Außengewindeabschnitt (11) und einen zwischen der äußeren Schulter und dem Außengewindeabschnitt sowie einen zwischen dem Außengewindeabschnitt und der Zapfenstirnfläche angeordneten gewindefreien Abschnitt (12) aufweist und
mit einem mit dem Zapfenelement verschraubbaren Muffenelement (1), das ein zwischen einer inneren Schulter (3) und einer Muffenstirnfläche (4) angeordneten kegeligen Innengewindeabschnitt (5) und eine zwischen der inneren Schulter und dem Innengewindeabschnitt sowie einem zwischen dem Innengewindeabschnitt und der Muffenstirnfläche angeordneten gewindefreien Abschnitt (6) aufweist, wobei die im verschraubten Zustand einander gegenüberliegenden gewindefreien Abschnitte des Zapfen- und des Muffenelementes im Bereich der inneren Schulter eine andere Länge aufweisen als die im Bereich der äußeren Schulter liegenden gewindefreien Abschnitte des Zapfen- und des Muffenelementes,
**dadurch gekennzeichnet,**
**daß** die innere Schulter (3,10) die Primärschulter bildet und nach Zusammenbau des Bohrgestängeverbinders und Verschraubung bis zu 90% seiner Streckgrenze die Zapfenstirnfläche (10) sich an der inneren Schulter (3,10) bis zu einem Druck festzieht, der jeden Druck übersteigt, welcher durch die Muffenstirnfläche (4) auf die äußere Schulter (9) ausgeübt wird, wobei sich die Muffenstirnfläche (4) hauptsächlich an der äußeren Schulter (9) festzieht, wenn ein zusätzliches Drehmoment während des Bohrens auftritt und die im Bereich der inneren Schulter (3,10) sich befindenden gewindefreien Abschnitte (7,13) mindestens zwei mal so lang sind wie die im Bereich der äußeren Schulter (9) sich befindenden gewindefreien Abschnitte (6,12).

2. Bohrgestängeverbinder nach Anspruch 1,
**dadurch gekennzeichnet,**
**daß** die im Bereich der inneren Schulter (3,10) sich befindenden gewindefreien Abschnitte (7,13) drei mal so lang sind wie die im Bereich der äußeren Schulter (9) sich befindenden gewindefreien Abschnitte (6,12).

3. Bohrgestängeverbinder nach einem der Ansprüche 1 oder 2,
**dadurch gekennzeichnet,**
**daß** der Abstand (14) zwischen Zapfenstirnfläche (10) und äußerer Schulter (9) größer ist als der Abstand (15) zwischen Muffenstirnfläche (4) und innerer Schulter (3,10).

4. Bohrgestängeverbinder nach einem der Ansprüche 1 - 3,
**dadurch gekennzeichnet,**
**daß** der Innen- (5) und der Außengewindeabschnitt (11) mit einem groben Standardgewinde versehen ist, dessen Lastflanke (22) einen Winkel im Bereich von 15 - 20 Grad und die Führungsflanke (21) einen Winkel von 30° aufweist.

5. Bohrgestängeverbinder nach Anspruch 4,
**dadurch gekennzeichnet,**
**daß** die Lastflanke (22) einen Winkel von 18° aufweist.

6. Bohrgestängeverbinder nach einem der Ansprüche 1 - 5,
**dadurch gekennzeichnet,**
**daß** der Innengewindeabschnitt (5) im Muffenelement (1) eine steilere Kegelneigung aufweist als der Außengewindeabschnitt (11) im Zapfenelement (2).

7. Bohrgestängeverbinder nach Anspruch 6,
**dadurch gekennzeichnet,**
**daß** der Unterschied in der Kegelneigung 0,03 - 0,3 mm /25,4 mm beträgt.

8. Bohrgestängeverbinder nach einem der Ansprüche 1 - 7,
**dadurch gekennzeichnet,**
**daß** die Außenfläche (24) der Muffe (23) von der Stirnfläche (4) bis etwa über den 3. Gewindegang mit einer Ausdrehung (25) versehen ist.

## Claims

1. A drill rod coupling with a pin member (2) which has a conical, externally threaded portion (11) arranged between an outer shoulder (9) and a pin end surface (10), and a respective unthreaded portion (12) arranged between the outer shoulder and the externally threaded portion and between the externally threaded portion and the pin end surface, and with a sleeve member (1) which can be screwed together with the pin member and which has a conical, internally threaded portion (5) arranged between an inner shoulder (3) and a sleeve end surface (4), and a respective unthreaded portion (6) arranged between the inner shoulder and the internally threaded portion and between the internally threaded portion and the sleeve end surface, wherein the unthreaded portions of the pin member and the sleeve member have a different length in the region of the inner shoulder than the unthreaded portions of the pin member and the sleeve member in the region of the outer shoulder, the unthreaded portions lying opposite one another when the pin member and the sleeve member are screwed together, **characterised in that** the inner shoulder (3, 10) forms the primary shoulder and, after the drill rod coupling has been assembled and screwed together to 90% of its elastic limit, the pin end surface (10) is tightened against the inner shoulder (3, 10) up to a pressure which exceeds any pressure exerted on the outer shoulder (9) by the sleeve end surface (4), wherein the sleeve end surface (4) is principally tightened against the outer shoulder (9) if an additional torque is applied during drilling and if the unthreaded portions (7, 13) located in the region of the inner shoulder (3, 10) are at least twice as long as the unthreaded portions (6, 12) located in the region of the outer shoulder (9).

2. A drill rod coupling according to claim 1, **characterised in that** the unthreaded portions (7, 13) located in the region of the inner shoulder (3, 10) are three times as long as the unthreaded portions (6, 12) located in the region of the outer shoulder (9).

3. A drill rod coupling according to either one of claims 1 and 2, **characterised in that** the distance (14) between the pin end surface (10) and the outer shoulder (9) is greater than the distance (15) between the sleeve end surface (4) and the inner shoulder (3, 10).

4. A drill rod coupling according to any one of claims 1 to 3, **characterised in that** the internally threaded portion (5) and the externally threaded portion (11) are provided with a coarse standard thread, the load flank (22) of which has an angle in the region of 15 to 20 degrees, and the leading flank (21) an angle of 30°.

5. A drill rod coupling according to claim 4, **characterised in that** the load flank (22) has an angle of 18°.

6. A drill rod coupling according to any one of claims 1 to 5, **characterised in that** the internally threaded portion (5) of the sleeve member (1) has a steeper taper than the externally threaded portion (11) of the pin member (2).

7. A drill rod coupling according to claim 6, **characterised in that** the difference in the taper is 0.03-0.3 mm / 25.4 mm.

8. A drill rod coupling according to any one of claims 1 to 7, **characterised in that** the outer surface (24) of the sleeve (23) is provided with a recess (25) extending from the end surface (4) approximately as far as the third turn of the thread.

## Revendications

1. Raccord de tige de forage comportant un élément de tourillon (2), lequel présente un segment conique à filetage mâle (11) agencé entre un épaulement extérieur (9) et une surface frontale de tourillon (10) et un segment non fileté (12) agencé entre l'épaulement extérieur et le segment à filetage mâle ainsi qu'entre le segment à filetage mâle et la surface frontale de tourillon, et un élément de manchon (1) pouvant être vissé avec l'élément de tourillon, lequel élément de manchon présente un segment conique taraudé (5) agencé entre un épaulement intérieur (3) et une surface frontale de manchon (4) et un segment non fileté (6) agencé entre l'épaulement intérieur et le segment taraudé ainsi qu'entre le segment taraudé et la surface frontale de manchon, les segments non filetés de l'élément de tourillon et de l'élément de manchon situés face-à-face à l'état vissé présentant dans la zone de l'épaulement intérieur une longueur différente de celle des segments non filetés de l'élément de tourillon et de l'élément de manchon situés dans la zone de l'épaulement extérieur,
**caractérisé en ce que** l'épaulement intérieur (3, 10) forme l'épaulement primaire et, après assemblage du raccord de tige de forage et vissage jusqu'à 90 % de sa limite d'élasticité, la surface frontale de tourillon (10) se bloque contre l'épaulement intérieur (3, 10) jusqu'à une pression qui dépasse la pression exercée par la surface frontale de manchon (4) sur l'épaulement extérieur (9), la surface frontale de manchon (4) se bloquant principalement contre l'épaulement extérieur (9) lorsqu'un couple de rotation supplémentaire survient en cours de forage, et **en ce que** les segments non filetés (7, 13) situés dans la zone de l'épaulement intérieur (3, 10) sont au moins deux fois plus longs que les segments non filetés (6, 12) situés dans la zone de l'épaulement extérieur (9).

2. Raccord de tige de forage selon la revendication 1,
**caractérisé en ce que** les segments non filetés (7, 13) situés dans la zone de l'épaulement intérieur (3, 10) sont trois fois plus longs que les segments non filetés (6, 12) situés dans la zone de l'épaulement extérieur (9).

3. Raccord de tige de forage selon l'une des revendications 1 ou 2,
**caractérisé en ce que** la distance (14) entre surface frontale de tourillon (10) et épaulement extérieur (9) est supérieure à la distance (15) entre surface frontale de manchon (4) et épaulement intérieur (3,10).

4. Raccord de tige de forage selon l'une des revendications 1 à 3,
**caractérisé en ce que** le segment taraudé (5) et le segment à filetage mâle (11) sont pourvus d'un filetage standard grossier dont le flanc de charge (22) présente un angle compris entre 15 et 20 degrés et le flanc de guidage (21) un angle de 30°.

5. Raccord de tige de forage selon la revendication 4,
**caractérisé en ce que** le flanc de charge (22) présente un angle de 18°.

6. Raccord de tige de forage selon l'une des revendications 1 à 5,
**caractérisé en ce que** le segment taraudé (5) dans l'élément de manchon (1) présente une conicité plus obtuse que le segment à filetage mâle (11) sur l'élément de tourillon (2).

7. Raccord de tige de forage selon la revendication 6,
**caractérisé en ce que** la différence de conicité est comprise entre 0,03 et 0,3 mm/25,4 mm.

8. Raccord de tige de forage selon l'une des revendications 1 à 7,
**caractérisé en ce que** la surface extérieure (24) du manchon (23) est pourvue d'une dépression (25) de la surface frontale (4) jusqu'au-dessus du troisième pas de vis environ.
